Europäisches Patentamt

European Patent Office

Office européen des brevets

(19)

(11) Publication number: **0 090 149**
**B1**

(12) **EUROPEAN PATENT SPECIFICATION**

(45) Date of publication of patent specification: 14.05.86

(21) Application number: 83101061.6

(22) Date of filing: 04.02.83

(51) Int. Cl.⁴: **G 11 B 23/04,** G 11 B 15/66,
**G 11 B 23/26**

(54) Leader block in a single reel magnetic tape catridge.

(30) Priority: 26.03.82 US 362439

(43) Date of publication of application:
05.10.83 Bulletin 83/40

(45) Publication of the grant of the patent:
14.05.86 Bulletin 86/20

(84) Designated Contracting States:
DE FR GB IT

(56) References cited:
EP-A-0 042 986
EP-A-0 062 171
GB-A- 716 632
US-A-3 105 645
US-A-3 154 236
US-A-3 195 825
US-A-3 424 393

(73) Proprietor: International Business Machines
Corporation
Old Orchard Road
Armonk, N.Y. 10504 (US)

(72) Inventor: Richard, Maurice Edmund
4700 N Snyder Circle
Tucson Arizona 85715 (US)

(74) Representative: Lewis, Alan John
IBM United Kingdom Patent Operations Hursley
Park
Winchester, Hants, S021 2JN (GB)

Courier Press, Leamington Spa, England.

# Description

The invention relates to a leader block seated in a single reel cartridge for magnetic tape and, in particular, to a cartridge configuration in which a leader block attached to the free end of the web material provides a positive connection to an automatic threading system.

EP—A—42986 discloses web transport apparatus for transferring an elongated flexible web wound on a supply reel to a take-up reel over a predetermined path, said apparatus being characterised by comprising first means defining a track adjacent and parallel to the predetermined tape path, a slider device movable over the track and comprising a first coupling part capable of being releasably coupled to a second coupling part permanently secured to the leading end of the web, and a mechanism for moving the slider device over the track to cause the first coupling part to follow the predetermined path and to carry the leading end of the web from the supply reel to the take-up reel and to position the second coupling part in a receiving recess in the take-up reel.

EP—A—42986 and a co-pending patent application No. 83100917.0 EP—A—82836 (published 29.6.83) disclose a generally rectangular shaped leader block seated in a correspondingly shaped leader block cavity formed at one corner of a single reel magnetic tape cartridge and anchored to the free end of a length of magnetic tape which is wound on a reel contained within the cartridge and which passes out from the cartridge through an aperture in its wall, said leader block having an externally accessible coupling slot for engagement by a pick-up arm of a tape threading device and comprising a shank and an enlarged head, said slot having its axis parallel to the reel axis and being stepped in cross-section intermediate its length to provide an enlarged end portion at one side of the block in which the enlarged head of the pick-up arm can be engaged by movement of the pick-up arm in a direction parallel to the reel axis following lateral movement of the arm to carry the shank into the slot.

In this art there is a general requirement in tape threading mechanisms for the height of the outer casing or cabinet to be as small as possible. This permits vertical racks constructed to receive a flight of threading machines to be a reasonable, minimum height. We have appreciated that part of the height requirement of a tape threading mechanism to be used with a tape cartridge having a leader block, as aforesaid, is the requirement initially to position the head of the pick-up arm and the coupling slot in axial alignment and then relatively to move the head into the slot. The height required therefore is, at a minimum, the thickness of the cartridge, the thickness of the head and a reasonable clearance space therebetween. The Applicants further appreciated that this height requirement could be reduced.

Accordingly the invention provides a generally rectangular shaped leader block seated in a correspondingly shaped leader block cavity formed at one corner of a single reel magnetic tape cartridge and anchored to the free end of a length of magnetic tape which is wound on a reel contained within the cartridge and which passes out from the cartridge through an aperture in its wall, said leader block having an externally accessible coupling slot for engagement by a pick-up arm of a tape threading device and comprising a shank and an enlarged head, said slot having its axis parallel to the reel axis and being stepped in cross-section intermediate its length to provide an enlarged end portion at one side of the block in which the enlarged head of the pick-up arm can be engaged by movement of the pick-up arm in a direction parallel to the reel axis following lateral movement of the arm to carry the shank into the slot, said leader block being characterised by having a portion cut-away at the said one side of the block in registry with the enlarged end portion of the coupling slot to provide a space between the leader block and the planar extension of the wall of the cartridge in which space the enlarged head of the pick-up arm can be received during said lateral movement of the pick-up arm and before axial movement of the arm to engage the enlarged head in the end portion of the coupling slot.

By initially accommodating the head in the cut-away portion, as aforesaid, the overall height requirement is substantially reduced.

The invention will now be further described with reference to the accompanying drawings in which:—

Fig. 1 is a plan view of the top of a single reel magnetic tape cartridge embodying the present invention;

Fig. 2 is a perspective view of a tape cartridge as shown in Fig. 1 with a portion of the cartridge broken away to show the opening into the cartridge without the leader block;

Figs. 3A through 3C are schematic views illustrating a movement of the preferred leader block design between a home position where the leader block prevents access to the tape media to a position where the leader block is shown extracting the tape media from the cartridge;

Figs. 4A and 4B are perspective views illustrating the relative movements involved in interconnecting a coupling device to the leader block and tape cartridge according to Fig. 1;

Fig. 5 is a perspective view showing the coupling of a leader block to another method of threading another leader block embodiment through a tape drive; and Figs. 6A and 6B show a partial sectioned and a plan view of another embodiment of a coupling device and a leader block.

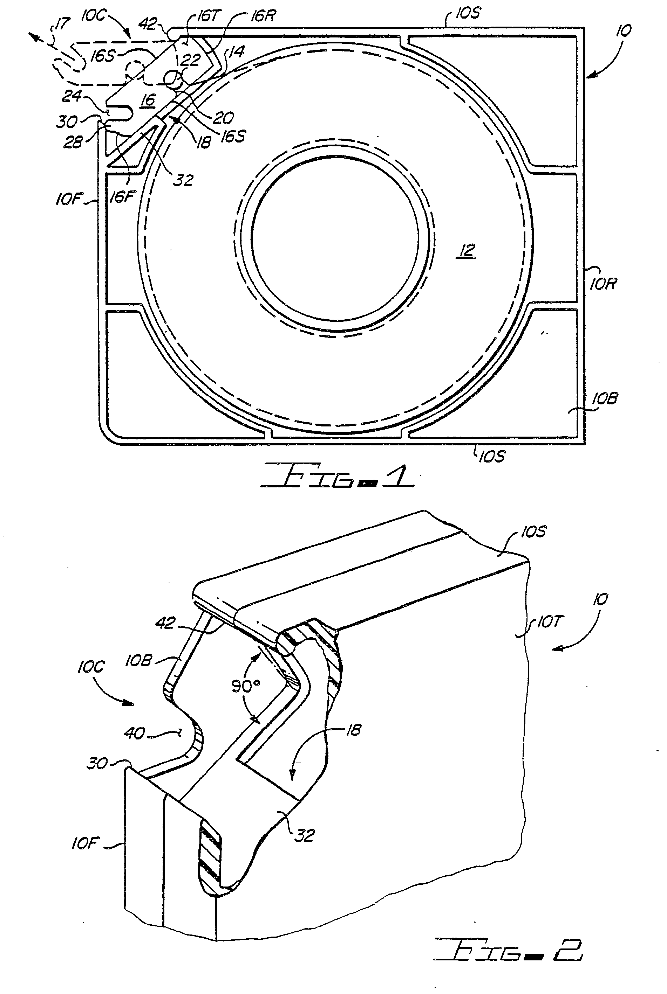

A magnetic tape cartridge 10 (Fig. 1) includes a reel hub 12 containing a plurality of layers of a magnetic tape 14 with a leader block 16 attached to the free end of the tape 14 as it extends from the reel hub 12. The cartridge 10 is generally rectangular in shape except for one corner 10C which holds the leader block 16. The cartridge 10 is formed of two mirror-image side pieces bonded together to form a unitary basically box-like structure. The structure has a frontal or leading edge piece 10F, a rear edge piece 10R, two side pieces 10S, a flat bottom section 10B, and a flat top section 10T. The corner 10C is angled relative to the adjacent sides to provide a shorter fifth side in which a leader block well and window 18 are included. This leader block window 18 permits exit of the tape 14 from the cartridge 10 when the leader block 16 is removed from the corner 10C for threading through a tape drive when the leader block 16 is moved in the direction of the arrow 17. The opening 18 is covered by the leader block 16 when the leader block is snapped into the well formed at the corner 10C of the cartridge 10.

The leader block 16 can be viewed generally as a rectangular block having a leading or frontal surface 16F, a rear surface 16R, side surfaces 16S, a top surface 16T, and a bottom surface 16B opposite the top surface 16T. A cutout 20 extends normal to the top and bottom surfaces of the leader block 16 and the cartridge 10. The cutout 20 together with a pin 22 of soft plastics material form a fastening means for holding the tape 14 to the leader block 16. The tape 14 is attached to the leader block 16 so that the side surfaces 16S of the leader block are generally parallel to the plane of the tape surface and the axis of the tape reel 12. The front surface 16F of the leader block 16 includes the means according to the present invention for engaging an automatic threading apparatus. The means, according to the preferred embodiment of this invention, include a slot 24 offset from the front surface 16F of the leader block 16 and generally extending from the top surface 16T to the bottom surface 16B of the leader block. The front surface 16F of the leader block is generally cylindrical and is provided with a rounded boss 28 which engages with an inclined surface 30 of the frontal piece 10F at the corner 10C of the cartridge 10.

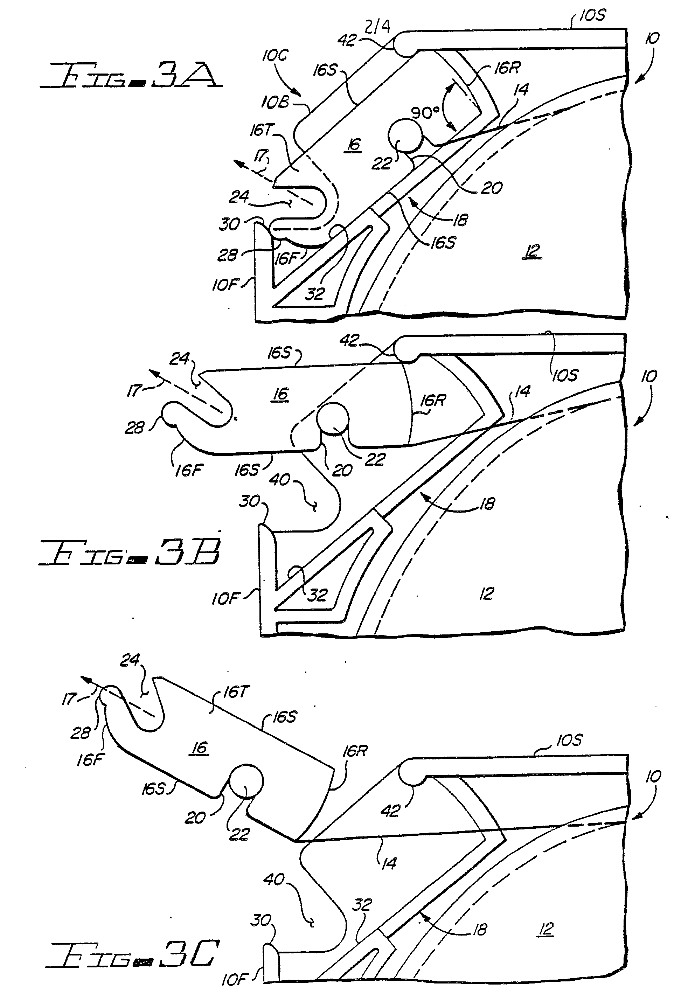

The window 18 (Fig. 2) for permitting the exit of the tape 14 from the cartridge reel 12 is disposed in a surface 32 of the cartridge 10 which extends at an angle of approximately 45° from below the inclined surface 30 of the front piece 10F and from one side piece 10S of the cartridge 10. The surface 32 together with the top piece 10T, the bottom piece 10B, and the side pieces 10S act as a leader block well. A portion of the bottom piece 10B of the cartridge 10 is cut out at 40 to accommodate a coupling device (not shown) for the leader block 16. The one side piece 10S has an intumed boss 42 at its edge in the corner 10C.

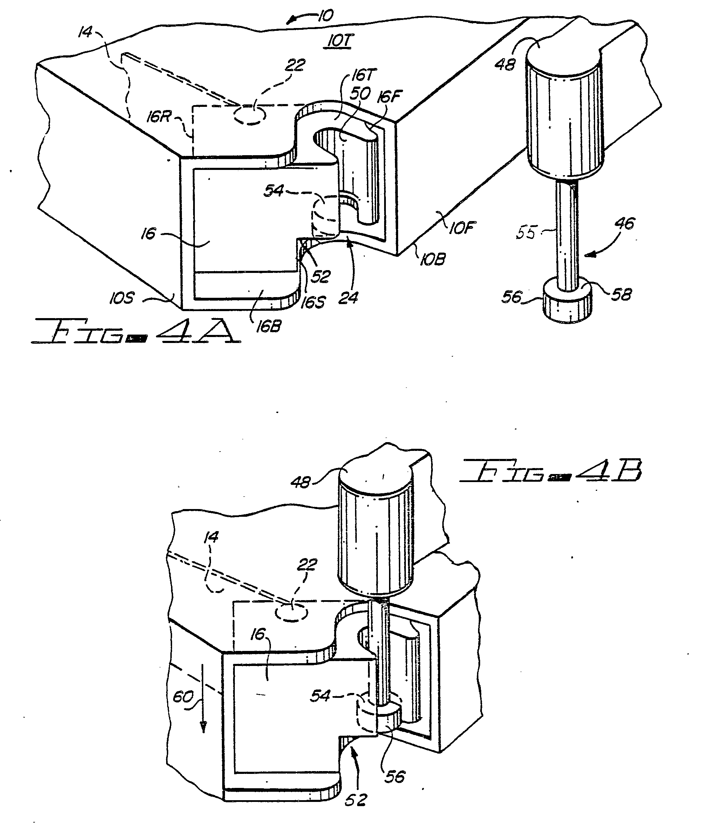

Initially, the leader block 16 (Fig. 3A) is snugly positioned into the well in the corner 10C of the cartridge 10 with the rounded boss 28 engaging the surface 30 of the frontal piece 10F. This together with the engagement of the boss 42 with the adjacent side surface 16S holds the leader block 16 firmly within the well in the corner 10C of the cartridge. This is the home position of the leader block 16.

A pulling force acting in the direction of the arrow 17 is applied to the leader block 16 by an automatic threading apparatus of the type to be described, or by any other suitable means. The leader block 16 is pivoted about the rounded boss 42 of the leader block well and the boss 28 passes over the inclined surface 30 so that the leader block takes up an intermediate position (Fig. 3B).

Further application of the pulling force draws the leader block 16 away from the cartridge 10 (Fig. 3C) and moves it in a direction which unwinds the tape 14 from the reel 12. During the operation of the tape drive, the tape 14 is unwound from the reel 12 and wound onto a machine reel (not shown). During a rewinding operation, the leader block 16 follows the reverse path from Fig. 3C to Fig. 3A as the reel 12 is rereeling the tape 14 and pulling the leader block 16 back into the cartridge 10. The cartridge 10 may then be removed from the tape drive and a new cartridge inserted for subsequent operations.

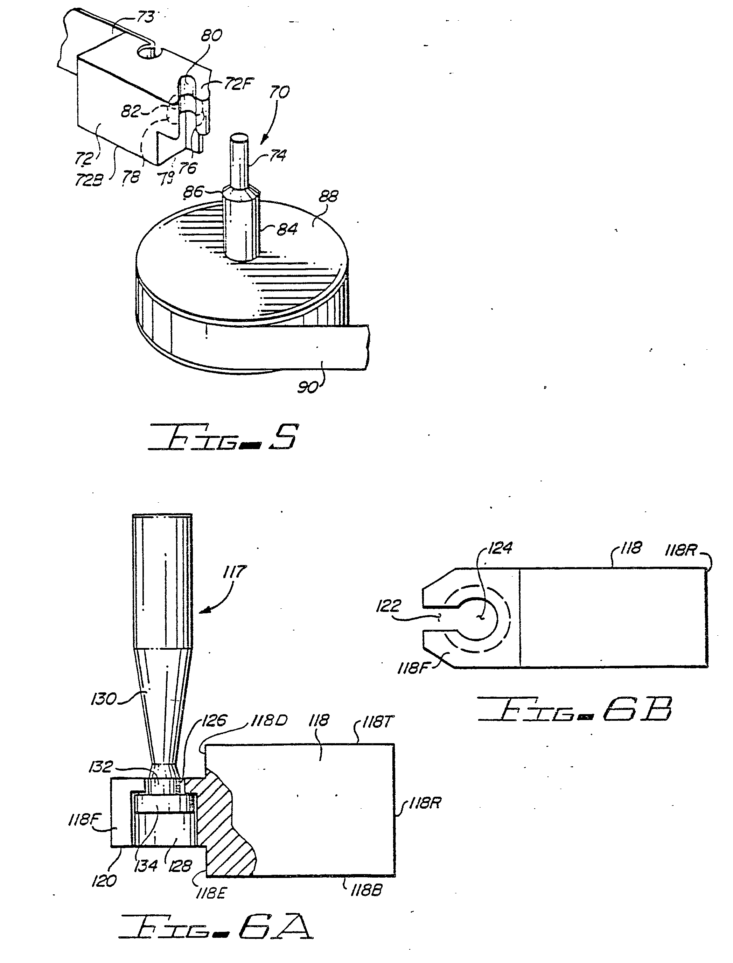

In Fig. 4A, the leader block 16 is shown connected to the magnetic tape 14 by a pin 22 which is again made of a soft plastic material. In Fig. 4B, the cartridge 10 is shown positioned while being inserted into a carriage loading station such that the leader block 16 is interconnected with a coupling device shown as a threading pin 46. The threading pin 46 is shown connected to a follower linkage 48 which can be connected to a suitable threading mechanism. The slot 24 is offset from the leading surface 16F and angled to the side surfaces 16S. The length of the slot 24 extends from the top surface 16T to the bottom surface 16B. When the leader block 16 is held within the leader block receiving well as shown in Fig. 4A, the length of the slot 24 is parallel to the axis of rotation of the reel 12. The depth of the slot 24 is angled to the side surface 16S such that when the leader block 16 in the leader block receiving well, the slot depth is perpendicular to the leading edge 10F of the cartridge 10. The depth of the slot 24 extends a distance into the leader block 16 less than the width of the leader block, i.e., the slot 24 stops short of the side 16S.

As can be seen in Fig. 4B the leader block 16 has a cut-away portion or cavity 52 reducing its thickness in the region of the coupling slot 24 so that the lower end of the slot registers with the cut-away portion 52. The cut-away portion 52 provides a space into which the head 56 of the pick-up arm can be positioned before being positioned in the socket 54. The inner or upper portion of the socket 54 is shaped gradually to decrease the size of the cavity 52 to the rounded section 50 at the rear of the slot 24. The pin 46 of the follower linkage passes laterally through the slot 24 to the cutout section 50. The pin 46 includes a larger cylinder head 56 with a tapered shoulder 58 for mating with the upper end of the socket or cavity 52 and the socket 54 of the leader block 16.

The cartridge 10 and the leader block 16 are placed within a carriage wherein the cartridge 10 and the leader block 16 have been moved forward in the direction such that the pin 46 is captured within the cutout 50. Then as is shown in Fig. 4B, relative motion is provided between the leader block 16 and the pin 46 and the follower linkage 48. Generally the cartridge 10 is moved downward in the direction of arrow 60. The motion places the tapered shoulder 58 and larger diameter section 56 of the pin 46 into the tapered section 54 and the socket 54 cutout 52 of the leader block 16. By this relative motion, the leader block is positively captured by the coupling device, pin 46, for pulling through a complex tape threading path by a suitable threading device.

The details of one suitable threading device are described in EP—A—42,989.

Fig. 5, illustrates a threading device and shows in close-up, the interconnection between a coupling device 70 and a leader block 72. A more complete description of this threading device is contained in copending application number 82103558.1, EP—A—60,571 (published 22.9.82).

The leader block 72 includes a coupling slot 76 in the front end 72F of the leader block 72. A rounded back section 80 is formed at the rear of the slot 76. An enlarged receiving cavity or socket 78 is formed in the leader block 72 and registers with the rounded back section 80. A tapered cutout section 82 is formed between the cavity 78 and the slot 76. The block 72 has a cut-away portion or cavity 79 formed at the lower end of the slot 76 which reduces the length of the slot to less than the thickness of the block. Besides the pin 74, the coupling device 70 includes a section 84 having a larger diameter than that of pin 74 and a tapered shoulder 86 between the larger diameter 84 and the smaller diameter of pin 74. The coupling device 70 is mounted to a spool 88 which contains a supply of a negator spring 90.

In the operation of this interconnection between the leader block 72 and the coupling device 70, the slot 76 in the leader block 72 passes over the pin 74 of the coupling device 70 as the cartridge is inserted into the tape drive until the pin 74 contacts the rounded back section 80 of the slot 76. The cartridge is then urged downward causing the leader block 72 to move downward until the tapered shoulder section 86 and the larger diameter 84 of pin 74 are inserted into the cutout section 78 and the tapered section 82 of the leader block 72. The leader block 72 thus becomes seated onto the coupling device 70 in a positive manner such that, when the negator spring 90 winds around the reel 88, the leader block 72 and a tape 73 are pulled along the threading path as described in the aforementioned patent application, number 82103558.1. (EP—A—60571).

Another embodiment of a leader block 118 is shown in Figs. 6A and 6B attached to a tapered coupling device 117. The leader block 118 includes a shorter leading section 118F which includes a keyed slot 122 leading to a cylindrical cutout section 124. The section 118F is formed between two cut-away portions 118D, 118E. The cylindrical cutout section 124 includes two cavities 126 and 128 of a narrower and wider diameter, respectively. The coupling device 117 includes a frustum section 130 leading to a cylindrical portion 132 of a narrow diameter and a cylindrical portion 134 of a larger diameter. In the process of connecting the leader block 118 to the coupling device 117, the frustum section 130 is passed between the keyed slot 122 of the leader block 118. Relative motion is then provided by either raising the coupling device 117 or lowering the cartridge containing the leader block 118. The leader block 118 includes a shorter leading surface 118F, a rear surface 118R and a stepped top surface 118T and bottom surface 118B. This relative motion causes the larger diameter cylindrical portion 134 of the coupling device 117 to enter into the larger diameter cavity 128 of the leader block 118. This provides a positive interconnection between the leader block and the coupling device since the larger diameter cylindrical portion 134 cannot pass through the keyed slot 122. Thus when the coupling device travels along its threading path, the leader block 118 will remove the tape from the cartridge. For the removal of the coupling device 117 from the leader block 118 after the tape has been replaced into the cartridge, the reverse relative motion occurs to either lower the coupling device 117 or raise the leader block 118 to permit the frustum portion 130 and the narrow diameter cylindrical portion 132 to pass between the keyed slot 122 when the cartridge and the leader block are removed from a position adjacent to the coupling device 117.

## Claims

1. A generally rectangular shaped leader block (16) seated in a correspondingly shaped leader block cavity (18) formed at one corner of a single reel magnetic tape cartridge (10) and anchored to the free end of a length of magnetic tape (14) which is wound on a reel (12) contained within the cartridge (10) and which passes out from the cartridge through an aperture (18) in its wall, said leader block (16) having an externally accessible coupling slot (24) for engagement by a pick-up arm (46) of a tape threading device and comprising a shank (55) and an enlarged head (56), said slot (24) having its axis parallel to the reel axis and being stepped in cross-section intermediate its length to provide an enlarged end portion (54) at one side of the block (16) in which the enlarged head (56) of the pick-up arm (46) can be engaged by movement of the pick-up arm in a direction parallel to the reel axis following lateral movement of the arm to carry the shank (55) into the slot (24), said leader block (16) being characterised by having a portion (52) cut-away at the said one side of the block in registry with the enlarged end portion (54) of the coupling slot (24) to provide a space between the leader block (16) and the planar extension of the wall (10B) of the cartridge (10) in which space the enlarged head (56) of the pick-up arm can be received during said lateral movement of the pick-up arm (46) and before axial movement of the arm to engage the enlarged head (56) in the end portion (54) of the coupling slot (24).

2. A leader block as claimed in claim 1 and for use with a pick-up arm (117 Fig. 6A) comprising a narrow necked portion (130), further characterised in that the coupling slot is of keyhole cross-section comprising a narrow entrance passage (122) through which the necked portion of the pick-up arm (117) can be passed, and which opens out into a wider central passage (124) which is stepped intermediate its length to provide the enlarged end portion (128) and with which the shank (132) and the enlarged head portion (134) of the pick-up arm (117) are engaged by axial movement of the arm following lateral movement of the arm to carry the necked portion (139) of the pick-up arm through the narrow entrance passage (122) into the central portion (124).

**Patentansprüche**

1. Im wesentlichen rechteckiger Führungsblock (16), welcher in einer an einer Ecke einer Einspulen-Magnetbandkassette (10) ausgebildeten entsprechend geformten Führungsblockausnehmung (18) aufgenommen und am freien Ende eines Magnetbandes (14) verankert ist, welches auf eine in der Kassette (10) enthaltene Spule (12) gewickelt ist und aus der Kassette durch eine in ihrer Wand befindliche Öffnung (18) austritt, wobei der Führungsblock (16) einen von außen zugänglichen Kupplungsschlitz (24) für ein Erfassen durch einen Aufnehmerarm (46) einer Bandfädelvorrichtung aufweist, welcher einen Schaft (55) und einen vergrößerten Kopf (56) aufweist, wobei der Schlitz (24) mit seiner Achse parallel zur Spulenachse liegt und innerhalb seiner Länge zur Schaffung eines vergrößerten Endabschnitts (54) an einer Seite des Blockes (16), in welchen der vergrößerte Kopf (56) des Aufnehmerarms (46) durch eine Bewegung des Aufnehmerarms parallel zur Spulenachse nach einem seitlichen Bewegung, die den Schaft (55) in den Schlitz (24) führt, eingreifen kann, im Querschnitt gestuft ist, wobei der Führungsblock (16) dadurch gekennzeichnet ist, daß er an der einen Seite des Blocks in Ausrichtung mit dem vergrößerten Endabschnitt (54) des Kupplungsschlitzes (24) einen Ausschnitt (52) aufweist, um damit einen Raum zwischen dem Führungsblock (16) und der ebenen Fortsetzung der Wand (10B) der Kassette (10) zu schaffen, in welchem der vergrößerte Kopf (56) des Aufnehmerarms während der seitlichen Bewegung des Aufneherarms (46) und vor der axialen Bewegung des Arms für das Eingreifen des vergrößerten Kopfes (56) in den Endabschnitt (54) des Kupplungsschlitzes (24) aufgenommen werden kann.

2. Führungsblock nach Anspruch 1 und zur Verwendung mit einem Aufnehmerarm (117, Fig. 6A), welcher einen engen Halsabschnitt (130) aufweist, ferner dadurch gekennzeichnet, daß der Kupplungsschlitz einen Schlüssellochquerschnitt hat, welcher einen engen Eingangsdurchtritt (122) umfaßt, durch welchen der Halsabschnitt des Aufnehmerarms (117) geführt werden kann und welcher sich in einen weiteren Mitteldurchtritt (124) öffnet, welcher innerhalb seiner Länge zur Schaffung des vergrößerten Endabschnitts (128) gestuft ist und mit welchem der Schaft (132) und der vergrößerte Endabschnitt (134) des Aufnehmerarms (117) durch eine axiale Bewegung des Arms nach einer seitlichen Bewegung des Arms zur Führung des Halsabschnitts (139) des Aufnehmerarms durch den engen Eingangsdurchtritt (122) in den Mittelabschnitt (124) in Eingriff kommen.

**Revendications**

1. Bloc d'amorce (16) de forme générale rectangulaire, logé dans une cavité (18) de forme correspondante, logeant le block d'amorce et formée au niveau d'un angle d'une cassette (10) de la bande magnétique à une seule bobine, et fixé à l'extrémité libre d'une longueur de bande magnétique (14) qui est enroulée sur une bobine (12) logée a l'intérieur de la cassette (10) et qui sort de la cassette par l'intermédiaire d'une ouverture (18) ménagée dans la paroi de cette cassette, ledit bloc d'amorce (16) comportant une fente d'accouplement (16) accessible depuis l'extérieur et permettant l'engagement d'un bras de saisie (46) d'un dispositif d'enfilage de bande et comportant une tige (55) et une tête (56), ladite fente (24) ayant son axe parallèle à l'axe de la bobine et possédant une section transversale étagée sur une partie intermédiaire de sa longueur de manière à fournir une partie d'extrémité élargie (54) sur laquelle une face du bloc (16), dans laquelle la tête élargie (56) du bras de saisie (46) peut s'engager par déplacement du bras de saisie suivant une direction parallèle à l'axe de la bobine, à la suite du déplacement latéral du bras servant à amener la tige (55) dans la fente (24), ledit bloc d'amorce (16) étant caractérisé en ce qu'il comporte une partie (52) évidée qui est située au niveau de ladite face du bloc et est aligné avec la partie d'extrémité élargie (54) de la fente d'accouplement (24) de manière à former un espace entre le bloc d'amorce (16) et le prolongement plat de la paroi (10A) de la cassette (10), et dans lequel la tête élargie (56) du bras de saisie peut être logée pendant ledit déplacement latéral du bras de saisie (46) et avant le déplacement axial du bras pour l'engagement de la tête élargie (56) dans la partie d'extrémité (54) de la fente d'accouplement (24).

2. Bloc d'amorce selon la revendication 1, et destiné à être utilisé avec un bras de saisie (117, figure 6A) comportant une partie rétrécie en forme de col (130), caractérisé en ce que la fente de couplage possède une section transversale en forme de trou de serrure, incluant un passage d'entrée rétréci (122), par l'intermédiaire duquel la partie rétrécie du bras de saisie (117) peut passer et qui débouche dans un passage central plus large (124), qui est étagé dans une zone intermédiaire de son étendue, de manière à former une partie d'extrémité élargie (128), dans lequel s'engagent la tige (132) et la partie de tête élargie (134) du bras de saisie (117), sous l'effet du déplacement axial du bras intervenant à la suite du déplacement latéral du bras destiné à transférer la partie rétrécie (139) du bras de saisie à travers le passage d'entrée étroit (122) dans la partie centrale (124).

Fig-1

Fig-2

**0 090 149**

FIG-3A

FIG-3B

FIG-3C

2

FIG-4A

FIG-4B

Fig. 5

Fig. 6A

Fig. 6B